# EUROPEAN PATENT APPLICATION

(11) **EP 4 765 380 A1**
(43) Date of publication of application: **24.06.2026**
(21) Application number: 25857298.1
(22) Date of filing: 13.08.2025
(51) Int. Cl.: H01M 50/15, H01M 50/103

(54) **SECONDARY BATTERY AND METHOD FOR MANUFACTURING SAME**

(30) Priority: 21.08.2024 KR 20240111983
(71) Applicant: LG Energy Solution, Ltd., Seoul 07335 (KR)
(72) Inventor: LEE, Ji Sun, Daejeon 34122 (KR); HWANG, Ji Young, Daejeon 34122 (KR); KIM, Sang Hun, Daejeon 34122 (KR); LEE, Jae Ho, Daejeon 34122 (KR); CHOI, Ji Eun, Daejeon 34122 (KR); LEE, Min Kyu, Daejeon 34122 (KR)
(74) Representative: Plasseraud IP
(86) International application number: PCT/KR2025/012308
(87) International publication number: WO 2026/043209

(57) **Abstract**

The present disclosure relates to a secondary battery and a method for manufacturing the same, and the secondary battery according to an aspect of the present disclosure includes an electrode assembly extending in a direction; a cap including a cover portion disposed at one side of the electrode assembly in a length direction; and an outer packaging film including an accommodation portion that wraps the electrode assembly in a peripheral direction and an edge portion disposed at one side of the accommodation portion in a width direction, and having one surface that contacts an outer surface of the cover portion, wherein the cap further includes a reinforcement portion disposed opposite the cover portion with the edge portion positioned therebetween; and a cap-side connection portion connecting the reinforcement portion to the cover portion.

## Description

### TECHNICAL FIELD

### CROSS-REFERENCE TO RELATED APPLICATIONS

This application is based on and claims priority from Korean Patent Application No. 10-2024-0111983 filed on August 21, 2024 with the Korean Intellectual Property Office, the disclosure of which is incorporated herein in its entirety by reference.

### TECHNICAL FIELD

The present disclosure relates to a secondary battery and a method for manufacturing the same, and more particularly, to a secondary battery capable of charging and discharging electrical energy and a method for manufacturing the same.

### BACKGROUND ART

In general, the types of secondary batteries include nickel cadmium batteries, nickel hydrogen batteries, lithium-ion batteries and lithium-ion polymer batteries. Secondary batteries are used in not only small products such as digital cameras, P-DVDs, MP3Ps, mobile phones, PDAs, portable game devices, power tools and E-bikes, but also large products requiring high output such as electric vehicles or hybrid electric vehicles and energy storage systems that store surplus power or new renewable energy and energy storage systems for backup.

In this instance, a secondary battery includes an electrode assembly including a positive electrode, a negative electrode and a separator stacked on each other, a case accommodating the electrode assembly and an electrode lead for electricity conduction between the electrode assembly and an external device. The secondary battery may be called a cylindrical, prismatic or pouch-type secondary battery according to the structure or shape of the case. The case requires predetermined functions for the operation of the secondary battery.

Recently, efforts are being made to develop a case for secondary batteries including a pair of caps covering two sides of the electrode assembly, respectively, and an outer packaging film that wraps the electrode assembly. Such case requires sealability to prevent leakage of internal materials (for example, an electrolyte solution) and ensure safety.

### DISCLOSURE

### TECHNICAL PROBLEM

The present disclosure is designed to solve the above-described problems, and therefore the present disclosure is directed to providing a secondary battery with improved sealability and a method for manufacturing the same.

The problems of the present disclosure are not limited to the above-mentioned problems, and these and other problems will be clearly understood by persons having ordinary skill in the technical field pertaining to the present disclosure from the following description.

### TECHNICAL SOLUTION

According to an aspect of the present disclosure, provided is a secondary battery including an electrode assembly extending in a direction; a cap including a cover portion disposed at one side of the electrode assembly in a length direction; and an outer packaging film including an accommodation portion that wraps the electrode assembly in a peripheral direction and an edge portion disposed at one side of the accommodation portion in a width direction, and having one surface that contacts an outer surface of the cover portion, wherein the cap further includes a reinforcement portion disposed opposite the cover portion with the edge portion positioned therebetween; and a cap-side connection portion connecting the reinforcement portion to the cover portion.

In this instance, the reinforcement portion may face the other surface of the edge portion.

In this instance, the reinforcement portion may contact the other surface of the edge portion.

In this instance, the cap may further include a plurality of protrusion portions protruding from the reinforcement portion toward the edge portion.

In this instance, the protrusion portion may decrease in cross section in a direction away from the reinforcement portion.

In this instance, the outer packaging film may further include an additional edge portion overlapping the edge portion between the cover portion and the reinforcement portion; and a film-side connection portion connecting the additional edge portion to the edge portion.

In this instance, the film-side connection portion may be located adjacent to the cap-side connection portion.

In this instance, the cap may further include an additional reinforcement portion positioned between the edge portion and the additional edge portion; and an additional cap-side connection portion connecting the additional reinforcement portion to the reinforcement portion.

In this instance, the cap-side connection portion and the additional cap-side connection portion may be present on two sides of the reinforcement portion in the length direction of the electrode assembly, respectively.

In this instance, the additional cap-side connection portion may have a bent shape from the reinforcement portion toward the additional reinforcement portion.

In this instance, the reinforcement portion may be coupled to the other surface of the edge portion by heat or pressure.

In this instance, the cap may include a pair of caps, and the pair of caps may be present on two sides of the electrode assembly in the length direction, respectively.

In this instance, the reinforcement portion may extend in the length direction of the electrode assembly, and the connection portion may be located at one side of the reinforcement portion in the extension direction.

In this instance, the connection portion may have a bent shape from the cover portion toward the reinforcement portion.

In this instance, the cover portion may include a cover part having a plate shape to cover the one side of the electrode assembly; and a sidewall part extending from an edge of the cover part toward the electrode assembly, the edge portion may wrap an outer peripheral surface of the sidewall part, and the reinforcement portion may include a plurality of reinforcement portions arranged around the cover part.

In this instance, the cover part may have a polygonal shape, the sidewall part may include a plurality of sidewall parts, each sidewall part may extend from each edge side of the cover part, and the plurality of reinforcement portions may correspond to the plurality of sidewall parts, respectively.

According to another aspect of the present disclosure, provided is a method for manufacturing a secondary battery, the method including the steps of placing a cap including a cover portion on one side of an electrode assembly in a length direction, the electrode assembly extending in a direction; placing an outer packaging film such that the electrode assembly is wrapped with an accommodation portion of the outer packaging film and one surface of an edge portion of the outer packaging film contacts an outer surface of the cover portion; and deforming a connection portion connecting the cover portion of the cap to a reinforcement portion extending from the cover portion so that the reinforcement portion is disposed opposite the cover portion with the edge portion positioned therebetween.

In this instance, the step of deforming the connection portion may include bending the connection portion from the cover portion toward the other surface of the edge portion.

In this instance, the method for manufacturing the secondary battery may further include coupling the other surface of the edge portion to the reinforcement portion.

In this instance, the step of coupling the edge portion to the reinforcement portion may include applying heat or pressure to an outer surface of the reinforcement portion.

### ADVANTAGEOUS EFFECTS

According to an aspect embodiment of the present disclosure, as the edge portion of the outer packaging film is placed on the outer surface of the cover portion of the cap, and the reinforcement portion of the cap is disposed opposite the cover portion with the edge portion positioned therebetween, the area of coupling between the cap and the outer packaging film may be increased. Through this, sealability of the internal space surrounded by the cap and the outer packaging film may be improved.

The effects of the present disclosure are not limited to the above-described effects, and these and other effects will be clearly understood by persons having ordinary skill in the technical field pertaining to the present disclosure from the specification and the accompanying drawings.

### BRIEF DESCRIPTION OF THE DRAWINGS

FIG. 1 is a perspective view of a secondary battery according to a first embodiment of the present disclosure when viewed from above.
FIG. 2 is a cross-sectional view of FIG. 1, taken along the line I-I.
FIG. 3 is an enlarged view of section A in FIG. 2.
FIG. 4 is a cross-sectional view of a secondary battery according to a second embodiment of the present disclosure, showing an enlarged view of a region corresponding to section A in FIG. 2.
FIG. 5 is a cross-sectional view of a secondary battery according to a third embodiment of the present disclosure, showing an enlarged view of a region corresponding to section A in FIG. 2.
FIG. 6 is a cross-sectional view of a secondary battery according to a fourth embodiment of the present disclosure, showing an enlarged view of a region corresponding to section A in FIG. 2.
FIG. 7 is a cross-sectional view of a secondary battery according to a fifth embodiment of the present disclosure, showing an enlarged view of a region corresponding to section A in FIG. 2.
FIG. 8 is a flowchart of a method for manufacturing a secondary battery according to an embodiment of the present disclosure.
FIG. 9 is a diagram illustrating the step S40 of the method for manufacturing the secondary battery according to an embodiment of the present disclosure.
FIG. 10 is a diagram illustrating the step S40 according to a variation of the manufacturing method according to an embodiment of the present disclosure. In this instance, a region corresponding to a film-side connection portion of an outer packaging film is indicated by hatching.
FIG. 11 is a detailed diagram illustrating the step S40 of the manufacturing method according to an embodiment of the present disclosure.
FIG. 12 is a detailed diagram illustrating the step S40 according to a variation of the manufacturing method according to an embodiment of the present disclosure.

### BEST MODE

The exemplary embodiments of the present disclosure will be described in sufficient detail to those skilled in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

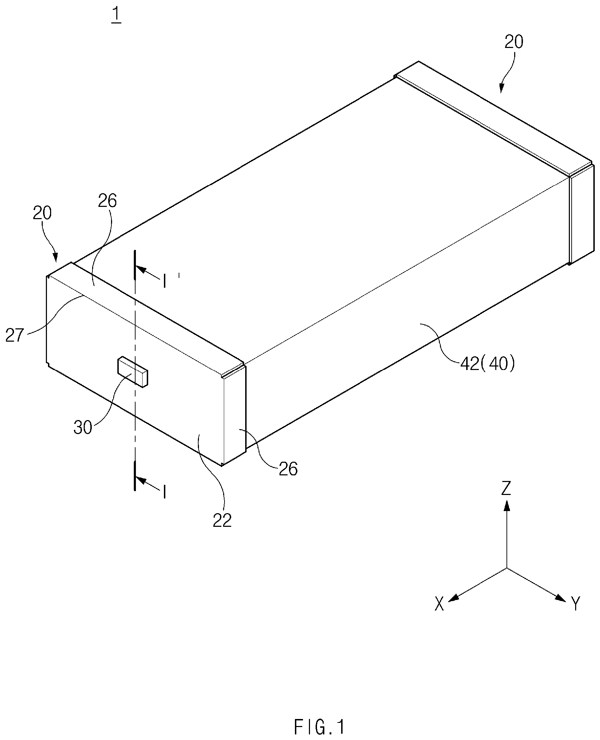

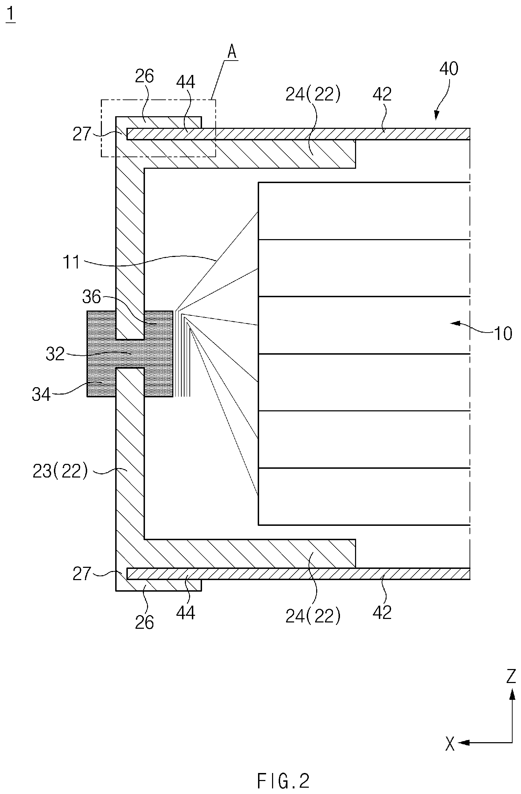

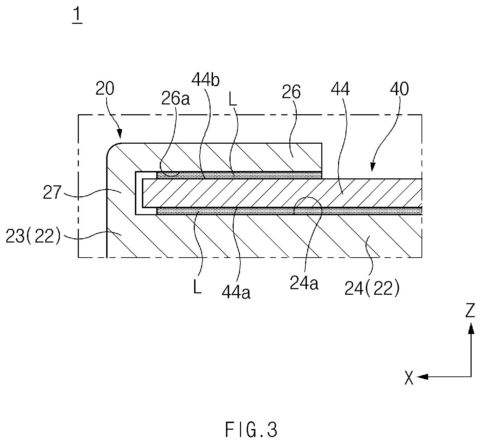

FIG. 1 is a perspective view of a secondary battery according to a first embodiment of the present disclosure when viewed from above. FIG. 2 is a cross-sectional view of FIG. 1, taken along the line I-I. FIG. 3 is an enlarged view of section A in FIG. 2.

FIGS. 1 to 3 show the secondary battery according to the first embodiment of the present disclosure. Referring to FIGS. 1 to 3, the secondary battery 1 according to the first embodiment of the present disclosure may be a secondary battery for charging and discharging electrical energy.

The secondary battery 1 according to this embodiment may have a structure in which an electrode assembly 10 capable of charging and discharging electrical energy is sealed by a cap 20 and an outer packaging film 40 together with an electrolyte solution. In this instance, the secondary battery 1 according to this embodiment may be configured such that a reinforcement portion 26 of the cap 20 covers an edge portion of the outer packaging film 40 in the width direction (X-axis direction).

Accordingly, the secondary battery 1 according to the first embodiment of the present disclosure may have a larger area of coupling between the cap 20 and the outer packaging film 40, thereby improving sealability of the electrode assembly 10 housed inside. Here, the area of coupling between the two components may refer to an area where the two components are directly or indirectly coupled to each other.

Hereinafter, each component of the secondary battery according to the first embodiment of the present disclosure will be described in detail.

Referring to FIG. 2, the secondary battery 1 according to the first embodiment of the present disclosure may include the electrode assembly 10. The electrode assembly 10 may take responsibility for the charging and discharging function.

To this end, the electrode assembly 10 may be formed by stacking positive electrodes, separators and negative electrodes in a sequential order. The electrode assembly 10 may be classified into a cylindrical type, a stack type or a stack-and-fold type according to the shape or structure. In this embodiment, the electrode assembly 10 is not limited to a particular type or shape.

In this instance, the electrode assembly 10 may have an electrode tab 11. The electrode tab 11 may extend from each of the plurality of electrodes (the positive electrodes or the negative electrodes). The electrode tab 11 may be configured to conduct electricity from the electrode to an external device. To this end, the electrode tab 11 may be coupled to a terminal 30 as described below.

Meanwhile, in this embodiment, the electrode assembly 10 may extend in one direction. As illustrated, the electrode assembly 10 may extend in the left-right direction (X-axis direction) on the basis of FIG. 2. Hereinafter, the one direction is referred to as length direction of the electrode assembly 10 (X-axis direction).

Referring to FIGS. 1 to 3, the secondary battery 1 according to the first embodiment of the present disclosure may include the cap 20. The cap 20 may be configured to cover one side of the electrode assembly 10 in the length direction (X-axis direction). The cap 20 may be made of a material having a predetermined rigidity.

In this instance, as illustrated, the cap 20 may include a pair of caps. Additionally, the pair of caps 20 may cover two sides of the electrode assembly 10 in the length direction (X-axis direction), respectively. However, where necessary, only one cap 20 may be included.

The following description will be made based on the cap 20 located at the left side (positive direction of the X-axis) on the basis of FIG. 2. Referring to FIGS. 1 to 3, the cap 20 of the secondary battery 1 according to the first embodiment of the present disclosure may include a cover portion 22. The cover portion 22 may be disposed at one side of the electrode assembly 10 in the length direction (X-axis direction) to cover the electrode assembly 10.

In this embodiment, the cover portion 22 may include a plate-shaped cover part 23 that partially covers the electrode assembly 10. As illustrated, in this embodiment, the cover part 23 may be a rectangular plate.

The shape of the cover part 23 may be properly changed as needed. For example, the cover part 23 may be a triangular plate, or a polygonal plate with five or more sides, a circular or oval plate, or a plate having a curved edge and a linear edge.

In this embodiment, the cover portion 22 may include a sidewall part 24 extending from the edge of the cover part 23. The sidewall part 24 may extend from the cover part 23 toward the electrode assembly 10. The sidewall part 24 may extend parallel to the length direction of the electrode assembly 10 (X-axis direction).

In this embodiment, because the cover part 23 is provided as a rectangular plate, the sidewall part 24 may include side walls, each extending from each of the four sides that form the edges of the rectangle. In other words, the sidewall part 24 may have a rectangular ring shape extending in the length direction of the electrode assembly 10 (X-axis direction). The shape of the sidewall part 24 may be properly modified to fit the cover part 23.

In this instance, the sidewall part 24 may have an outer surface 24a on the outer side thereof. The outer surface 24a may be an outer peripheral surface facing a direction (Y-axis direction and Z-axis direction) perpendicular to the length direction of the electrode assembly 10 (X-axis direction). In this embodiment, the outer peripheral surface of the sidewall part 24 may be generally referred to as the outer surface 24a of the cover portion 22.

As will be described in detail below, the outer surface 24a of the cover portion 22 may be wrapped by the edge portion 44 of the outer packaging film 40 as described below. The edge portion 44 and the outer surface 24a of the cover portion 22 may be coupled to each other. To this end, a predetermined bonding layer L may be present between the outer surface 24a of the cover portion 22 and the edge portion 44 of the outer packaging film 40.

In this instance, the bonding layer L may be formed by melting a resin layer present on at least one of the outer surface 24a of the cover portion 22 or the edge portion 44 of the outer packaging film 40 by heat or pressure. Alternatively, the bonding layer L may be formed by applying an adhesive to at least one of the outer surface 24a of the cover portion 22 or the edge portion 44 of the outer packaging film 40. The bonding layer L is not limited to a particular type or material.

Meanwhile, in this embodiment, the cover portion 22 has been described as including the plate and the side wall extending from the edge of the plate. However, the cover portion 22 is not limited to a particular structure or shape and may include any structure or shape for covering one side of the electrode assembly 10 and providing the outer surface to which the outer packaging film 40 is coupled.

Referring back to FIGS. 1 to 3, the cap 20 according to an embodiment of the present disclosure may include the reinforcement portion 26. The reinforcement portion 26 may be configured to increase the coupling strength between the cap 20 and the outer packaging film 40, thereby improving sealability of the secondary battery 1.

In this embodiment, the reinforcement portion 26 may be located opposite the sidewall part 24 of the cover portion 22 with the edge portion 44 of the outer packaging film 40 positioned therebetween. In other words, the edge portion 44 may be positioned between the reinforcement portion 26 and the sidewall part 24. Accordingly, one surface 44a of the edge portion 44 may face the outer surface 24a of the cover portion 22, and the other surface 44b may face the reinforcement portion 26.

In this embodiment, the reinforcement portion 26 may contact the other surface 44b of the edge portion 44. In this instance, the contact of the two components may be understood as including not only direct contact but also indirect contact through the medium of an intervening element.

The reinforcement portion 26 may have a plate shape that covers the other surface 44b of the edge portion 44. Alternatively, the reinforcement portion 26 may be provided in the form of a film or sheet having a predetermined thickness.

In this instance, the reinforcement portion 26 may extend in the length direction of the electrode assembly 10 (X-axis direction). In other words, the reinforcement portion 26 may extend parallel to the sidewall part 24. Through this, the area of coupling between the reinforcement portion 26 and the edge portion 44 may be increased, thereby improving sealability of the secondary battery 1.

Meanwhile, in this embodiment, the bonding layer L may be also present between the reinforcement portion 26 and the other surface 44b of the edge portion 44. In this instance, the bonding layer L may be configured equally to the bonding layer L between the outer surface 24a of the cover portion 22 and the edge portion 44.

In this instance, in case where a sufficiently strong physical coupling strength between the reinforcement portion 26 and the other surface 44b of the edge portion 44 is provided, there may be no bonding layer L between them.

For example, in case where the reinforcement portion 26 is compressed against the other surface 44b of the edge portion 44 to ensure a sufficient coupling strength between them, there may be no bonding layer L. This may be also applied to the bonding layer L between the outer surface 24a of the cover portion 22 and the edge portion 44.

The cap 20 of the secondary battery 1 according to the first embodiment of the present disclosure may include a cap-side connection portion 27. The cap-side connection portion 27 may be configured to connect the reinforcement portion 26 to the cover portion 22.

In this embodiment, the cap-side connection portion 27 may be present on the outer side of the cover portion 22 in the length direction of the electrode assembly 10 (X-axis direction). The cap-side connection portion 27 may be located at one end of the reinforcement portion 26 in the extension direction (X-axis direction). In this instance, the one end may be an end facing away from the electrode assembly 10.

In this instance, the cap-side connection portion 27 may be present on the edge side of the cover part 23 of the cover portion 22. The cap-side connection portion 27 may extend along the edge of the cover part 23. Through this, the reinforcement portion 26 and the cover portion 22 may be strongly connected.

In this embodiment, the cap-side connection portion 27 may have a bent shape from the cover part 23 of the cover portion 22 toward the reinforcement portion 26. However, the cap-side connection portion 27 is not limited to a particular shape or position and may have any shape or position for connecting the reinforcement portion 26 to the cover portion 22.

Meanwhile, referring to FIG. 1, the reinforcement portion 26 and the cap-side connection portion 27 of the cap 20 according to the first embodiment of the present disclosure may include a plurality of reinforcement portions and a plurality of cap-side connection portions, and the plurality of reinforcement portions 26 and the plurality of cap-side connection portions 27 may be disposed around the cover part 23. As illustrated, the reinforcement portion 26 may include four pairs of reinforcement portions, the cap-side connection portion 27 may include four pairs of cap-side connection portions, and each may be present on each of the edge sides of the cover part 23 having the rectangular shape.

Through this, the area of coupling between the outer packaging film 40 and the cap 20 may be increased in the peripheral direction of the electrode assembly 10, thereby further improving sealability of the secondary battery 1. The number of reinforcement portions 26 and the number of cap-side connection portions 27 may be properly changed depending on the shape of the cover portion 22.

Referring to FIGS. 1 and 2, the secondary battery 1 according to the first embodiment of the present disclosure may include the terminal 30. The terminal 30 may be configured to conduct electricity from the electrode assembly 10 to the external device. To this end, the terminal 30 may be made of a conductive material.

In this embodiment, the terminal 30 may include a body portion 32. The body portion 32 may pass through the cover part 23 of the cap 20. The body portion 32 may have a cylindrical shape, but is not limited thereto.

In this embodiment, the terminal 30 may include an outer stopper portion 34. The outer stopper portion 34 may be present on one side of the body portion 32. The one side may be a portion facing away from the electrode assembly 10.

In this instance, the outer stopper portion 34 may have a larger cross-sectional area than the body portion 32. Thus, the outer stopper portion 34 may be held onto the cover part 23. Accordingly, the movement of the terminal 30 toward the electrode assembly 10 beyond a predetermined distance may be restricted.

In this embodiment, the terminal 30 may include an inner stopper portion 36. The inner stopper portion 36 may be present on the other side of the body portion 32. The other side may be a portion facing the electrode assembly 10. The electrode tab 11 may be coupled to the inner stopper portion 36. For example, the electrode tab 11 may be welded to the outer surface of the inner stopper portion 36, but is not limited thereto.

In this instance, the inner stopper portion 36 may have a larger cross-sectional area than the body portion 32. Thus, the inner stopper portion 36 may be held onto the cover part 23. Accordingly, the movement of the terminal 30 away from the electrode assembly 10 beyond a predetermined distance may be restricted.

Meanwhile, although not shown in detail, the terminal 30 may include a pair of terminals. Any one of the pair of terminals 30 may be electrically connected to the positive electrode of the electrode assembly 10, and the other may be electrically connected to the negative electrode.

The pair of terminals 30 may be present on two sides of the electrode assembly 10 in the length direction (X-axis direction), respectively. Alternatively, the pair of terminals 30 may be disposed together on one side of the electrode assembly 10 in the length direction (X-axis direction). The terminal 30 is not limited to a particular position.

In this embodiment, the terminal 30 has been described as having a dumbbell shape with a concave central portion to hold it onto the cover part 23. However, the terminal 30 is not limited to a particular structure or shape and may have any structure or shape for conducting electricity from the electrode assembly 10 to the external device.

Referring back to FIGS. 1 to 3, the secondary battery 1 according to the first embodiment of the present disclosure may include the outer packaging film 40. The outer packaging film 40 may be configured to wrap the uncovered outer surface of the electrode assembly 10 that is not covered by the cap 20.

In this embodiment, the outer packaging film 40 may have a predetermined flexibility. As described above, in this embodiment, as the electrode assembly 10 is partially covered by the outer packaging film 40 that can stretch or bend, damage to the electrode assembly 10 may be minimized.

Describing in more detail, the electrode assembly 10 may expand or contract during charging and discharging of the secondary battery 1. In this instance, the outer packaging film 40 may be deformed in response to the deformation of the electrode assembly 10, thereby preventing damage to the electrode assembly 10.

This feature of the secondary battery 1 may prevent damage to the electrode assembly 10, compared to a prismatic case. Because the prismatic case has little or no shape change, excessive interferences between the case and the expanding electrode assembly 10 may occur.

Meanwhile, the outer packaging film 40 of the secondary battery 1 according to the first embodiment of the present disclosure may include an accommodation portion 42. The accommodation portion 42 may wrap the electrode assembly 10 in the peripheral direction between the pair of caps 20.

Here, the peripheral direction may be a direction that surrounds the length direction of the electrode assembly 10 (X-axis direction). Through this, the electrode assembly 10 may be isolated and sealed from the outside by the cap 20 and the outer packaging film 40.

As described above, in this embodiment, as opposed to the existing pouch-type cases, the electrode assembly 10 may be sealed without forming a cup portion in the outer packaging film 40. Here, the cup portion may refer to a concave portion that is recessed into a cup shape to hold the electrode assembly 10. Accordingly, the secondary battery 1 may avoid a problem with cracks that may occur in the forming process of the cup portion.

Meanwhile, the outer packaging film 40 of the secondary battery 1 according to the first embodiment of the present disclosure may include the edge portion 44. The edge portion 44 may be present on one side of the accommodation portion 42 in the width direction (X-axis direction). Here, the width direction of the accommodation portion 42 may be parallel to the length direction of the electrode assembly 10.

In this instance, the edge portion 44 may include a pair of edge portions, and the pair of edge portions 44 may be present on two sides of the accommodation portion 42 in the width direction, respectively. The edge portion 44 may be present along the edge of the accommodation portion 42 in the width direction (X-axis direction). In other words, the edge portion 44 may extend in the peripheral direction of the electrode assembly 10.

Referring to FIGS. 2 and 3, as described above, the edge portion 44 may wrap the outer surface 24a of the cover portion 22. The edge portion 44 may wrap the outer surface 24a of the cover portion 22 in the peripheral direction of the electrode assembly 10.

In this embodiment, one surface 44a of the edge portion 44 may be coupled to the outer surface 24a of the cover portion 22 through the medium of the bonding layer L. The one surface 44a of the edge portion 44 may be coupled in direct contact with the outer surface 24a of the cover portion 22.

In this instance, as described above, the edge portion 44 may be positioned between the outer surface 24a of the cover portion 22 and the reinforcement portion 26. Alternatively, the edge portion 44 may be inserted between the outer surface 24a of the cover portion 22 and the reinforcement portion 26. The other surface 44b of the edge portion 44 may be coupled to the reinforcement portion 26 through the medium of the bonding layer L. The other surface 44b of the edge portion 44 may be coupled in direct contact with the reinforcement portion 26.

As described above, in the secondary battery 1 according to the first embodiment of the present disclosure, the two surfaces 44a, 44b of the edge portion 44 of the outer packaging film 40 may be coupled to the outer surface 24a of the cover portion 22 and the reinforcement portion 26, respectively. Accordingly, the area of coupling between the cap 20 and the outer packaging film 40 may be increased, thereby improving sealability of the secondary battery 1.

Hereinafter, the secondary battery according to another embodiment of the present disclosure will be described. The secondary battery according to another embodiment of the present disclosure will be described based on differences between the secondary battery according to the first embodiment of the present disclosure described above and the secondary battery according to another embodiment.

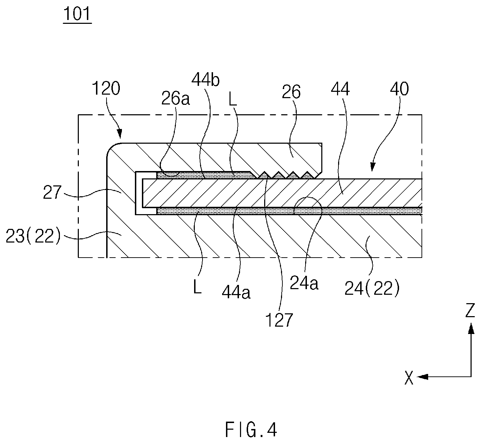

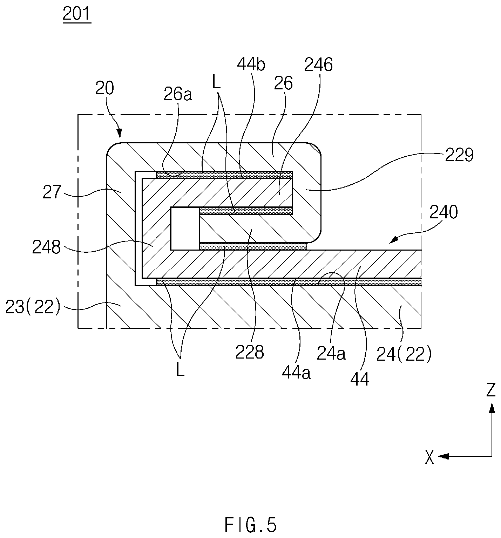

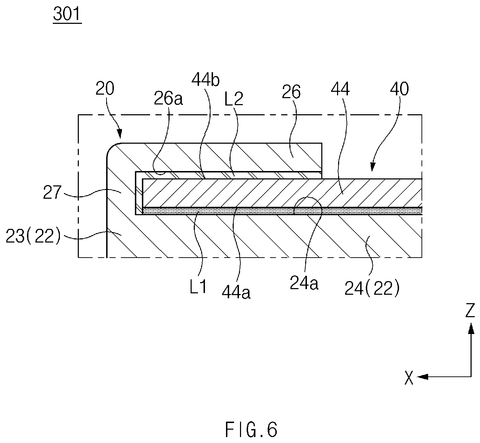

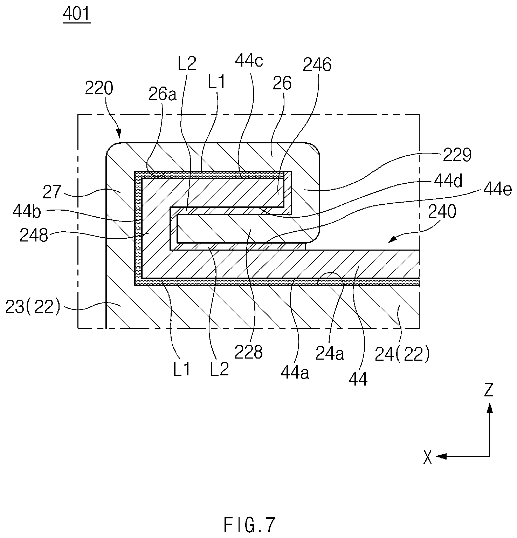

FIG. 4 is a cross-sectional view of the secondary battery according to a second embodiment of the present disclosure, showing an enlarged view of a region corresponding to section A in FIG. 2. FIG. 5 is a cross-sectional view of the secondary battery according to a third embodiment of the present disclosure, showing an enlarged view of a region corresponding to section A in FIG. 2. FIG. 6 is a cross-sectional view of the secondary battery according to a fourth embodiment of the present disclosure, showing an enlarged view of a region corresponding to section A in FIG. 2. FIG. 7 is a cross-sectional view of the secondary battery according to a fifth embodiment of the present disclosure, showing an enlarged view of a region corresponding to section A in FIG. 2. In this instance, the element indicated by the same reference numeral as the above-described reference numeral may be understood as the same element that performs the same function.

FIG. 4 shows the secondary battery according to the second embodiment of the present disclosure. Referring to FIG. 4, the cap 120 of the secondary battery 101 according to the second embodiment of the present disclosure may further include a plurality of protrusion portions 127. The protrusion portion 127 may be configured to further increase the coupling strength between the cap 120 and the outer packaging film 40.

In this embodiment, the protrusion portion 127 may protrude from the reinforcement portion 26 toward the outer packaging film 40. In this instance, the protrusion portion 127 may decrease in cross section in a direction away from the reinforcement portion 26. In other words, the protrusion portion 127 may have a pointed shape.

The protrusion portion 127 may be pushed against the other surface 44b of the edge portion 44. The protrusion portion 127 may be physically or structurally coupled to the edge portion 44. Accordingly, the coupling strength between the reinforcement portion 26 and the edge portion 44 may be increased. This will improve sealability of the secondary battery 101.

FIG. 5 shows the secondary battery according to the third embodiment of the present disclosure. Referring to FIG. 5, the outer packaging film 240 of the secondary battery 201 according to the third embodiment of the present disclosure may include an additional edge portion 246. The additional edge portion 246 may be configured to increase the area of coupling between the outer packaging film 240 and the cap 220.

In this embodiment, the additional edge portion 246 may overlap the edge portion 44 between the reinforcement portion 26 and the outer surface 24a of the cover portion 22. The additional edge portion 246 may extend parallel to the edge portion 44 in the length direction of the electrode assembly 10 (X-axis direction).

In this instance, one surface of the additional edge portion 246 may be coupled to the reinforcement portion 26 through the medium of the bonding layer L. Here, the one surface may be a surface facing away from the cover portion 22. Meanwhile, the other surface of the additional edge portion 246 may be coupled to an additional reinforcement portion 228 as described below through the medium of the bonding layer L. Here, the other surface may be a surface facing the cover portion 22. Accordingly, the area of coupling between the cap 220 and the outer packaging film 240 may be improved.

Referring back to FIG. 5, in this embodiment, the outer packaging film 240 may include a film-side connection portion 247. The film-side connection portion 248 may be configured to connect the edge portion 44 to the additional edge portion 246.

In this instance, the film-side connection portion 248 may be located at one end of the additional edge portion 246 in the extension direction (X-axis direction). The one end of the additional edge portion 246 may be an end facing away from the electrode assembly 10.

In this embodiment, the film-side connection portion 248 may have a bent shape from the edge portion 44 toward the additional edge portion 246. The film-side connection portion 248 may be located adjacent to the cap-side connection portion 27 of the cap 220. In other words, the film-side connection portion 248 and the cap-side connection portion 27 may closely contact each other.

The cap 220 of the secondary battery 201 according to the third embodiment of the present disclosure may further include the additional reinforcement portion 228. The additional reinforcement portion 228 may be configured to increase the area of coupling between the outer packaging film 240 and the cap 220.

In this embodiment, the additional reinforcement portion 228 may be positioned between the additional edge portion 226 and the edge portion 44. The additional reinforcement portion 228 may extend in the length direction of the electrode assembly 10 (X-axis direction). The additional reinforcement portion 228 may extend parallel to the outer surface 24a of the cover portion 22 or the reinforcement portion 26.

In this embodiment, the additional reinforcement portion 228 may be coupled to each of the edge portion 44 and the additional edge portion 226 through the medium of the bonding layer L. Through this, the area of coupling between the cap 220 and the outer packaging film 240 may be further increased, thereby improving sealability of the secondary battery 201.

Meanwhile, in this embodiment, the cap 220 may further include an additional cap-side connection portion 229. The additional cap-side connection portion 229 may be configured to connect the reinforcement portion 26 to the additional reinforcement portion 228.

In this embodiment, the additional cap-side connection portion 229 may be located at one end of the reinforcement portion 26 in the extension direction (X-axis direction). In this instance, the one end may be an end facing the electrode assembly 10. The additional cap-side connection portion 229 and the cap-side connection portion 27 may be present on two sides of the reinforcement portion 26 in the extension direction (X-axis direction), respectively.

In this instance, in this embodiment, the additional cap-side connection portion 229 may have a bent shape from the reinforcement portion 26 toward the additional reinforcement portion 228. Accordingly, the additional reinforcement portion 228 and the additional cap-side connection portion 229 of the cap 220 and the additional edge portion 246 and the film-side connection portion 248 of the outer packaging film 240 may have a meshing and interlocking shape. Accordingly, the coupling strength between the cap 220 and the outer packaging film 240 may be improved.

Meanwhile, in this embodiment, the cover portion 22, the reinforcement portion 26 and the additional reinforcement portion 228 of the cap 220 and the edge portion 44 and the additional edge portion 246 of the outer packaging film 240 have been described as being coupled through the medium of the bonding layer L. However, so long as the cap 220 and the outer packaging film 240 are coupled by compression with sufficient strength, all or part of the bonding layer L may be absent.

FIG. 6 shows the secondary battery according to the fourth embodiment of the present disclosure. Referring to FIG. 6, the other components of the secondary battery 301 according to the fourth embodiment of the present disclosure excluding the component relating to the bonding layer may be configured equally to the secondary battery according to the first embodiment described above.

In this embodiment, a first bonding layer L1 may be present between the outer surface 24a of the cover portion 22 and the inside surface 44a of the edge portion 44. In this instance, the inside surface 44a of the edge portion 44 may be a surface facing the outer surface 24a of the cover portion 22. The first bonding layer L1 may be formed by melting the resin layer present on at least one of the outer surface 24a of the cover portion 22 or the inside surface 44a of the edge portion 44.

Meanwhile, in this embodiment, a second bonding layer L2 made of a different material from the first bonding layer L1 may be present between the reinforcement portion 26 and the outside surface 44b of the edge portion 44. Here, the outside surface 44b of the edge portion 44 may be a surface facing away from the cover portion 22. The outside surface 44b may be located opposite the inside surface 44a.

In this instance, in this embodiment, the second bonding layer L2 may be formed using an additional material. For example, the second bonding layer L2 may be formed by the adhesive applied to at least one of the outside surface 44b of the edge portion 44 or an outer surface 26a of the reinforcement portion 26, but is not limited thereto. In this instance, the outer surface 26a of the reinforcement portion 26 may be a surface facing the outside surface 44a of the edge portion 44.

Meanwhile, in this embodiment, the first and second bonding layers L1, L2 have been described as being present between the edge portion 44, and the cover portion 22 and the reinforcement portion 26, respectively. However, where necessary, at least one of the first bonding layer L1 or the second bonding layer L2 may be absent. For example, the second bonding layer L2 may be absent, and the reinforcement portion 26 and the outside surface 44a of the edge portion 44 may be configured to contact each other.

FIG. 7 shows the secondary battery according to the fifth embodiment of the present disclosure. Referring to FIG. 7, the other components of the secondary battery 401 according to the fifth embodiment of the present disclosure excluding the bonding layer may be configured equally to the secondary battery according to the third embodiment described above.

In this embodiment, the first bonding layer L1 may be present between the outer surface 24a of the cover portion 22 and the first surface 44a of the edge portion 44, between the cap-side connection portion 27 and the second surface 44b of the edge portion 44, and between the reinforcement portion 26 and a third surface 44c of the edge portion 44. In this instance, the first bonding layer L1 may be configured equally to the first bonding layer of the secondary battery according to the fourth embodiment described above.

Here, the first surface 44a of the edge portion 44 is a surface facing the outer surface 24a of the cover portion 22, the second surface 44b is a surface facing the cap-side connection portion 27, and the third surface 44c may be a surface facing the reinforcement portion 26, away from the cover portion 22.

Meanwhile, in this embodiment, the second bonding layer L2 may be present between a fourth surface 44d of the edge portion 44 and the additional reinforcement portion 228, and between a fifth surface 44e of the edge portion 44 and the additional reinforcement portion 228. In this instance, the second bonding layer L2 may be configured equally to the second bonding layer of the secondary battery according to the fourth embodiment described above.

Here, the fourth surface 44d of the edge portion 44 may be a surface located opposite the third surface 44c and facing the additional reinforcement portion 228, and the fifth surface 44e may be a surface located opposite the first surface 44a and facing the additional reinforcement portion 228.

Meanwhile, in this embodiment, the first and second bonding layers L1, L2 have been described as being present between the edge portion 44 and the cover portion 22, the cap-side connection portion 27, the reinforcement portion 26 and the additional reinforcement portion 228, but at least one of the first bonding layer L1 or the second bonding layer L2 may be absent.

Meanwhile, in this embodiment, the additional edge portion 229 has been described as being positioned between the reinforcement portion 26 and the additional reinforcement portion 228 due to a smaller length (hereinafter referred to as first length) of the edge portion 44, the film-side connection portion 248 and the additional edge portion 229 when unfolded to the left and right (X-axis direction) than the length (hereinafter referred to as second length) of the cap-side connection portion 27, the reinforcement portion 26, the additional cap-side connection portion 229 and the additional reinforcement portion 228 when unfolded to the left and right.

However, the first length and the second length may be properly changed as needed. For example, the first length may be larger than or equal to the second length, so the additional edge portion 229 may have a rolled or folded shape between the reinforcement portion 26 and the additional reinforcement portion 228.

Hereinafter, a method for manufacturing a secondary battery according to an embodiment of the present disclosure (hereinafter referred to as a "manufacturing method") will be described. The manufacturing method according to an embodiment of the present disclosure may be a method for manufacturing the secondary battery according to an embodiment of the present disclosure described above.

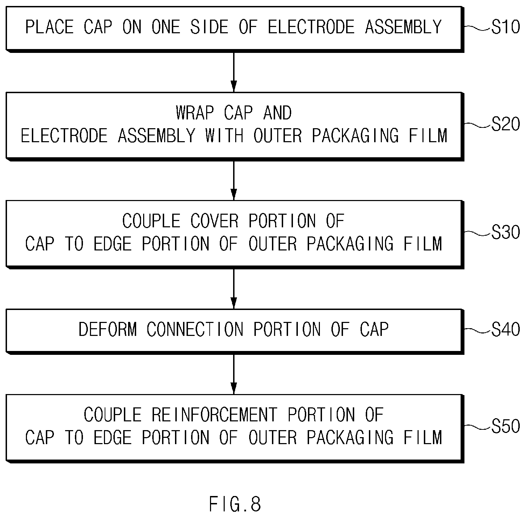

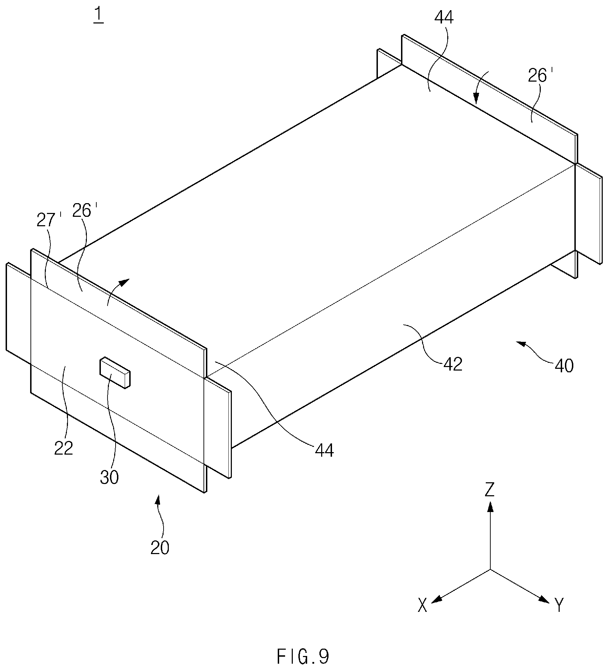

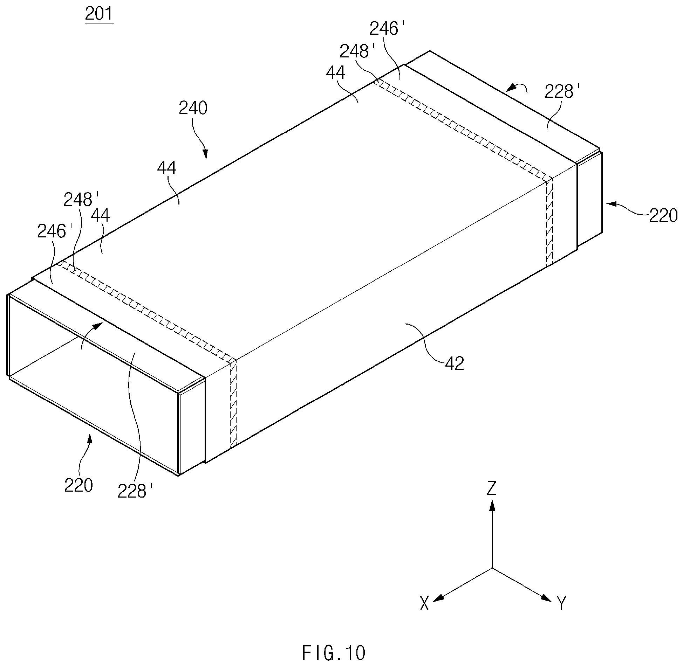

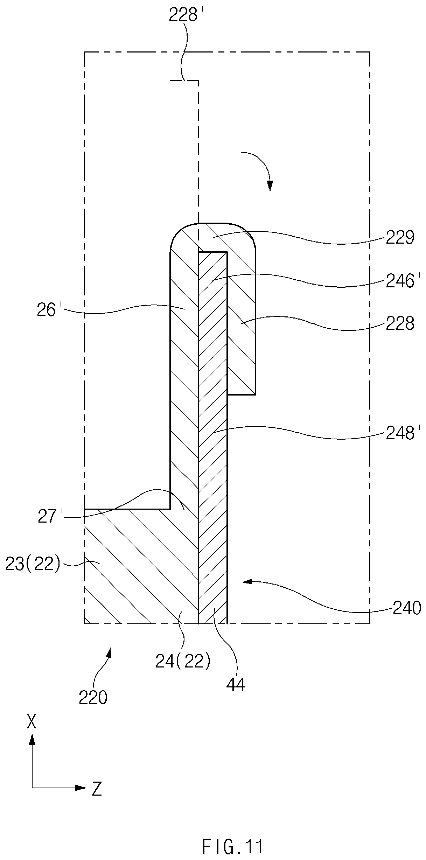

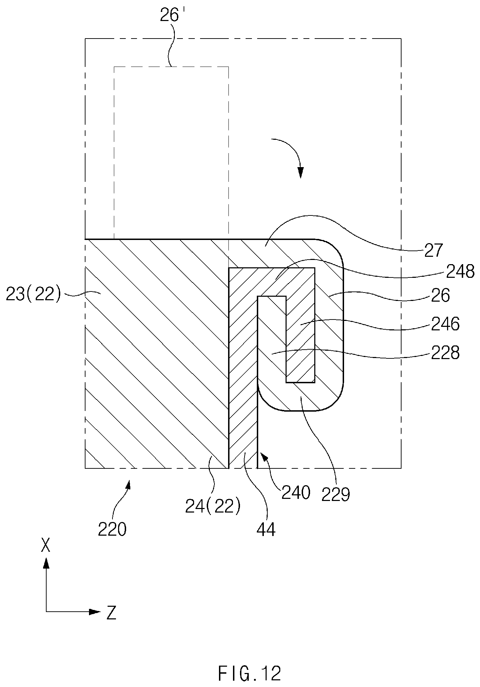

FIG. 8 is a flowchart of the method for manufacturing the secondary battery according to an embodiment of the present disclosure. FIG. 9 is a diagram illustrating the step S40 of the method for manufacturing the secondary battery according to an embodiment of the present disclosure. FIG. 10 is a diagram illustrating the step S40 according to a variation of the manufacturing method according to an embodiment of the present disclosure. In this instance, a region corresponding to the film-side connection portion of the outer packaging film is indicated by hatching. FIG. 11 is a detailed diagram illustrating the step S40 of the manufacturing method according to an embodiment of the present disclosure. FIG. 12 is a detailed diagram illustrating the step S40 according to a variation of the manufacturing method according to an embodiment of the present disclosure.

Referring to FIGS. 1 to 3, 8 and 9, in the manufacturing method according to an embodiment of the present disclosure, the cap 20 is placed on one side of the electrode assembly 10 in the length direction (X-axis direction) (S10).

In this instance, in this embodiment, the cap 20 may include a pair of caps and the pair of caps 20 may be disposed at two sides of the electrode assembly 10, respectively. Here, the cap 20 may be any one cap of the secondary battery according to the first embodiment of the present disclosure.

In this instance, in this embodiment, the reinforcement portion 26' of the cap 20 may have a shape that extends outward from the cover portion 22. The extension direction of the reinforcement portion 26' is not limited to a particular direction and may include any direction for providing a space that allows the outer packaging film 40 to wrap the outer surface of the cover portion 22 in the step S20 as described below.

Subsequently, in the manufacturing method according to an embodiment of the present disclosure, when the cap 20 is placed (S10), then the cap 20 and the electrode assembly 10 are wrapped with the outer packaging film 40 (S20). Accordingly, the electrode assembly 10 may be sealed by the cap 20 and the outer packaging film 40.

More specifically, in the step S20, the electrode assembly 10 may be wrapped with the accommodation portion 42 of the outer packaging film 40 in the peripheral direction, and the outer surface 24a of the cover portion 22 may be wrapped with the edge portion 44 in the peripheral direction.

Subsequently, in the manufacturing method according to an embodiment of the present disclosure, when the cap 20 and the electrode assembly 10 are wrapped with the outer packaging film 40, then the cover portion 22 of the cap 20 and the edge portion 44 of the outer packaging film 40 are coupled (S30).

To this end, in the step S30, heat or pressure may be applied to at least one of the cover portion 22 or the edge portion 44. The heat or pressure may melt the resin layer present on at least one of the cover portion 22 or the edge portion 44. Accordingly, the bonding layer L may be formed.

Where necessary, the bonding layer L formed in the step S30 may be made of the adhesive applied to at least one of the cover portion 22 or the edge portion 44. Alternatively, in the step S30, the edge portion 44 may be coupled in close contact with the outer surface 24a of the cover portion 22. In this variation, there may be no bonding layer L.

Meanwhile, referring to FIGS. 2, 8 and 9, in the manufacturing method according to an embodiment of the present disclosure, when the cover portion 22 and the edge portion 44 are coupled (S30), then the cap-side connection portion 27' of the cap 20 is deformed such that the reinforcement portion 26 is disposed opposite the cover portion 22 with the edge portion 44 positioned therebetween (S40).

To this end, in the step S40, the cap-side connection portion 27' may be bent from the cover portion 22 toward the other surface 44b of the edge portion 44. Here, the other surface 44b may be one of the outer surfaces of the edge portion 44 facing away from the cover portion 22.

Meanwhile, in the step S40 according to this embodiment, pressure may be applied to the reinforcement portion 26 toward the edge portion 44. Thus, the reinforcement portion 26 and the edge portion 44 may be brought into close contact with each other.

Referring back to FIGS. 2 and 8, in the manufacturing method according to an embodiment of the present disclosure, when the cap-side connection portion 27' is deformed (S40), then the reinforcement portion 26 of the cap 20 and the edge portion 44 of the outer packaging film 40 may be coupled (S50).

To this end, in the step S50, heat or pressure may be applied to at least one of the reinforcement portion 26 or the edge portion 44. The heat or pressure may melt the resin layer present on at least one of the reinforcement portion 26 or the edge portion 44. Accordingly, the bonding layer L may be formed.

Where necessary, the bonding layer L formed in the step S50 may be made of the adhesive applied to at least one of the reinforcement portion 26 or the edge portion 44. Alternatively, in the step S50, the reinforcement portion 26 may be compressed against the edge portion 44 to couple them. In this variation, there may be no bonding layer L.

Hereinafter, the variation of the manufacturing method according to an embodiment of the present disclosure will be described with further reference to FIGS. 10 to 12. In this instance, the following description will be made based on differences between the manufacturing method according to an embodiment and the manufacturing method according to the variation.

Referring to FIGS. 5, 8, 10 and 11, the manufacturing method according to this variation may be a method for manufacturing the secondary battery 201 (shown in FIG. 5) according to the third embodiment of the present disclosure described above.

In the manufacturing method according to this variation, before the step S40, the additional cap-side connection portion 229 connecting the additional reinforcement portion 228' to the reinforcement portion 26 may be deformed to bring the additional reinforcement portion 228' of the cap 220 into contact with the additional edge portion 246' of the outer packaging film 240.

To this end, in this step, as shown in FIG. 9, the additional cap-side connection portion 229 may be bent from the reinforcement portion 26 toward the outer surface of the additional edge portion 246'. In this instance, the outer surface of the additional edge portion 246' may be a surface facing away from the cap 220.

Subsequently, in the manufacturing method according to this variation, the additional reinforcement portion 228 and the additional edge portion 246' may be coupled. To this end, in this step, heat or pressure may be applied, and an external force may be applied to bring the additional reinforcement portion 228 and the additional edge portion 246' into close contact with each other.

Subsequently, referring to FIGS. 8, 10 and 12, the manufacturing method according to this variation performs the step S40. In this instance, in the step S40 according to this variation, the film-side connection portion 248 of the outer packaging film 240 and the cap-side connection portion 27 of the cap 220 may be deformed together.

More specifically, in the step S40, the cap-side connection portion 27 and the film-side connection portion 248 may be bent toward the outer surface of the edge portion 44. Thus, the additional reinforcement portion 228 may be positioned between the additional edge portion 246 and the edge portion 44. Additionally, the film-side connection portion 248 and the additional edge portion 246, and the cap-side additional reinforcement portion 229 and the additional reinforcement portion 228 may have a meshing and interlocking shape.

As described above, the manufacturing method according to an embodiment of the present disclosure may significantly increase the area of coupling between the cap and the outer packaging film. Accordingly, the secondary battery manufactured by the manufacturing method may have high sealability.

Although the manufacturing method according to an embodiment of the present disclosure has been described as a method for manufacturing the secondary battery according to the embodiments described above, the manufacturing method according to this embodiment is not limited to the method for manufacturing the secondary battery according to the embodiment of the present disclosure.

Although the present disclosure has been hereinabove described with regard to a certain number of embodiments and drawings, the present disclosure is not limited thereto, and it is apparent to persons having ordinary skill in the technical field pertaining to the present disclosure that the present disclosure may be embodied in many different forms within the scope of the technical aspects of the present disclosure and the appended claims and their equivalents.

### [List of Reference Numerals]

1, 101, 201: Secondary battery
10: Electrode assembly
20, 120, 220: Cap
30: Terminal
40, 240: Outer packaging film
L: Bonding layer

## Claims

1. A secondary battery comprising:
an electrode assembly extending in a direction;
a cap including a cover portion disposed at one side of the electrode assembly in a length direction; and
an outer packaging film including an accommodation portion that wraps the electrode assembly in a peripheral direction and an edge portion disposed at one side of the accommodation portion in a width direction, and having one surface that contacts an outer surface of the cover portion,
wherein the cap further includes:
a reinforcement portion disposed opposite the cover portion with the edge portion positioned therebetween; and
a cap-side connection portion connecting the reinforcement portion to the cover portion.

2. The secondary battery according to claim 1,
wherein the reinforcement portion faces the other surface of the edge portion.

3. The secondary battery according to claim 2,
wherein the reinforcement portion contacts the other surface of the edge portion.

4. The secondary battery according to claim 1,
wherein the cap further includes:
a plurality of protrusion portions protruding from the reinforcement portion toward the edge portion.

5. The secondary battery according to claim 4,
wherein the protrusion portion decreases in cross section in a direction away from the reinforcement portion.

6. The secondary battery according to claim 1,
wherein the outer packaging film further includes:
an additional edge portion overlapping the edge portion between the cover portion and the reinforcement portion; and
a film-side connection portion connecting the additional edge portion to the edge portion.

7. The secondary battery according to claim 6,
wherein the film-side connection portion is located adjacent to the cap-side connection portion.

8. The secondary battery according to claim 6,
wherein the cap further includes:
an additional reinforcement portion positioned between the edge portion and the additional edge portion; and
an additional cap-side connection portion connecting the additional reinforcement portion to the reinforcement portion.

9. The secondary battery according to claim 8,
wherein the cap-side connection portion and the additional cap-side connection portion are present on two sides of the reinforcement portion in the length direction of the electrode assembly, respectively.

10. The secondary battery according to claim 8,
wherein the additional cap-side connection portion has a bent shape from the reinforcement portion toward the additional reinforcement portion.

11. The secondary battery according to claim 1,
wherein the reinforcement portion is coupled to the other surface of the edge portion by heat or pressure.

12. The secondary battery according to claim 1,
wherein the cap includes a pair of caps, and
wherein the pair of caps are present on two sides of the electrode assembly in the length direction, respectively.

13. The secondary battery according to claim 1,
wherein the reinforcement portion extends in the length direction of the electrode assembly, and
wherein the connection portion is located at one side of the reinforcement portion in the extension direction.

14. The secondary battery according to claim 1,
wherein the connection portion has a bent shape from the cover portion toward the reinforcement portion.

15. The secondary battery according to claim 1,
wherein the cover portion includes:
a cover part having a plate shape to cover the one side of the electrode assembly; and
a sidewall part extending from an edge of the cover part toward the electrode assembly,
wherein the edge portion wraps an outer peripheral surface of the sidewall part, and
wherein the reinforcement portion includes a plurality of reinforcement portions arranged around the cover part.

16. The secondary battery according to claim 15,
wherein the cover part has a polygonal shape,
wherein the sidewall part includes a plurality of sidewall parts and each sidewall part extends from each edge side of the cover part, and
wherein the plurality of reinforcement portions corresponds to the plurality of sidewall parts, respectively.

17. A method for manufacturing a secondary battery, the method comprising the steps of:
placing a cap including a cover portion on one side of an electrode assembly in a length direction, the electrode assembly extending in a direction;
placing an outer packaging film such that the electrode assembly is wrapped with an accommodation portion of the outer packaging film and one surface of an edge portion of the outer packaging film contacts an outer surface of the cover portion; and
deforming a cap-side connection portion connecting the cover portion of the cap to a reinforcement portion extending from the cover portion so that the reinforcement portion is disposed opposite the cover portion with the edge portion positioned therebetween.

18. The method for manufacturing the secondary battery according to claim 17,
wherein the step of deforming the cap-side connection portion comprises bending the cap-side connection portion from the cover portion toward the other surface of the edge portion.

19. The method for manufacturing the secondary battery according to claim 17, further comprising:
coupling the other surface of the edge portion to the reinforcement portion.

20. The method for manufacturing the secondary battery according to claim 19,
wherein the step of coupling the edge portion to the reinforcement portion comprises applying heat or pressure to an outer surface of the reinforcement portion.
